# EUROPÄISCHE PATENTSCHRIFT

(11) **EP 2 137 510 B1**
(45) Veröffentlichungstag und Bekanntmachung des Hinweises auf die Patenterteilung: **03.05.2017**
(21) Anmeldenummer: 08734605.2
(22) Anmeldetag: 13.03.2008
(51) Int. Cl.: G01N 15/14, G01N 21/05

(54) **PARTIKELSENSOR FÜR STRÖMENDE FLÜSSIGE ODER GASFÖRMIGE MEDIEN**
PARTICLE SENSOR FOR FLOWING LIQUID OR GASEOUS MEDIA
DÉTECTEUR DE PARTICULES POUR DES MILIEUX LIQUIDES OU GAZEUX EN ÉCOULEMENT

(30) Priorität: 16.03.2007 DE 102007013356
(43) Veröffentlichungstag der Anmeldung: 30.12.2009
(73) Patentinhaber: Klotz, Markus, 75378 Bad Liebenzell (DE)
(72) Erfinder: Klotz, Markus, 75378 Bad Liebenzell (DE)
(74) Vertreter: DREISS Patentanwälte PartG mbB
(86) Internationale Anmeldenummer: PCT/EP2008/001995
(87) Internationale Veröffentlichungsnummer: WO 2008/113505

(56) Entgegenhaltungen:
- WO-A-2005/001436
- US-A- 4 395 676
- US-A1- 2003 017 079

## Beschreibung

Die Erfindung geht aus von einem Partikelsensor mit den im Oberbegriff des Patentanspruchs 1 angegebenen Merkmalen.

Partikelsensoren werden zur optischen Partikelerfassung in Partikelzählsystemen eingesetzt. Mit diesen wird vorrangig die Einhaltung von Reinheitsanforderungen bei diesbezüglich kritischen flüssigen und gasförmigen Medien kontrolliert, wie z. B. bei Trinkwasser, kontaminationsempfindlichen Lösungen der pharmazeutischen und chemischen Industrie, im medizinischen Bereich, aber auch bei Schmier- und Hydraulikölen, Raketentreibstoffen, bei der Raumluft von Reinräumen, Operationssälen usw. Dazu werden in solchen meistens aufgrund ständiger Reinigung mittels Filtervorrichtungen eigentlich sehr sauberen Medien die Größe und die jeweilige Anzahl der dennoch in ihnen enthaltenen, sie verunreinigenden Partikel ermittelt und dargestellt. Hierbei handelt es sich um kleinste Feststoffkörper im Mikrometerbereich, aber auch, wie z. B. in den Ölen, um z. B. demgegenüber sehr viel größere Wassertröpfchen und Luftblasen.

Mit diesen Partikelprüfungen werden auch z. B. Korngrößenanalysen zur Güteüberwachung, z. B. in der Wareneingangskontrolle, durchgeführt, z. B. bei Pulverlacken zur Ermittlung der unbekannten Größe von so genannten Überkörnern, und auch die Wirksamkeit von Filtervorrichtungen geprüft und überwacht, aber auch zu Testzwecken, z. B. mittels Multipass-Prüfständen, z. B. die Abscheideleistung von Filtern bzw. Filtermedien mittels einen Teststaub enthaltenden Testflüssigkeiten ermittelt. In diesen Fällen ist dann die maximal mögliche Größenordnung der mit Partikelsensoren zu detektierenden Verunreinigungs-Partikel bekannt.

Ab einer Partikelgrößenordnung von etwa 1 µm wird, wie beim vorliegenden Anmeldungsgegenstand, ein mit dem Lichtblockade- bzw. Lichtabschattungs-Messverfahren statt dem Streulicht-Messverfahren arbeitender Partikelsensor benutzt. Er besteht üblicherweise aus einer Lichtquelleneinheit zur Erzeugung eines gebündelten Lichtstrahls, einer vom zu untersuchenden Mediumstrom durchströmten gläsernen Küvette bzw. Messzelle mit einem als Partikel-Messabschnitt kapillar verengt ausgebildeten, von dem Lichtstrahl seitlich beleuchteten Engpass, und einer Detektoreneinheit. Mit ihr wird zur Größenbestimmung eines Partikels das Ausmaß der im Messabschnitt entsprechend seiner Größe verursachten Lichtstrahl-Abschattung erfasst.

Passieren gleichzeitig zwei oder mehr einander angenäherte Partikel den vom Lichtstrahl beleuchteten Messabschnitt, wird die dadurch verursachte Abschattung als die eines einzigen, entsprechend großen Partikels erfasst, was zu einem das Untersuchungsergebnis verfälschenden Koinzidenzfehler führt.

Andere, die Einsatzmöglichkeiten wie auch die Mess-Genauigkeit und Mess-Zuverlässigkeit eines Partikelsensor beeinflussende Größen sind z. B. die Dimensionierung des Engpass-Messabschnitts, die Viskosität des zu prüfenden flüssigen Mediums, die in einer Zeiteinheit zu prüfenden Medium-Durchsatzmengen, die Konzentration der Partikel im jeweiligen Medium wie auch die maximale Partikel-Größenordnung, die mit ihm gemessen werden können soll. Dabei können sich diese Einflüsse auch noch untereinander beeinflussen. Folglich gibt es keine universell einsetzbaren Partikelsensoren, sondern ist jeder konkret in ihnen ausgebildete Medien-Strömungsweg ein ihre Einsatzmöglichkeiten einschränkender Kompromiss.

Als Lichtstrahl wird vorzugsweise ein Laserstrahl eingesetzt. Dann umfasst die Lichtquelleneinheit üblicherweise drei in Reihe hintereinander auf der optischen Achse der Lichtquelleneinheit in einem Gehäuse, das ist z. B. ein viel Platz beanspruchender, z. B. 20 cm langer und 5 cm dicker Rohrabschnitt, angeordnete Bauteile: Eine handelsubliche miniaturisiert ausgebildete, vorzugsweise in ihre auf einer Platine angeordneten Ansteuerelektronik integrierte Standard-Laserdiode, ein Kollimator und eine weitere Sammellinsenoptik. Mit dem Kollimator wird der homogene, elliptisch-keulenförmig divergierende Laserstrahl parallel gerichtet und dann von der bei der Montage der drei Bauteile zeit- und damit kostenaufwändig zu justierenden Sammellinsenoptik rechtwinklig zur Strömungsrichtung des Mediumstroms von der Seite in den Messabschnitt der Messzelle projiziert.

Das nicht von Partikeln abgeschattete, den Messabschnitt der Messzelle durchquerende Laserstrahllicht trifft auf die fotoempfindliche Fläche einer üblicherweise als Lichtdetektor benutzten Fotodiode. Sie ist, standardmäßig ebenfalls miniaturisiert, auch in ihre auf einer Platine angeordnete Ansteuerelektronik integriert, die sich hinter dem Messzellen-Messabschnitt in einem separaten scheibenartig flachen, von der Messzelle durchquerten, beidseits von Glasscheiben verschlossenen, am der Laserdiode gegenüberliegenden Ende des Sensor-Rohrgehäuses angeordneten Gehäuse befindet.

US 2003/017079 A1 zeigt ein nach dem Lichtabsorptionsprinzip arbeitendes Absorptionssystem. US 4,395,676 zeigt ein Blendenmodul für eine Partikelsuspension, wobei physikalische Eigenschaften mikroskopischer Partikel mittels Impedanzmessung bestimmt werden.

Der Erfindung liegt die Aufgabe zu Grunde, einen nach dem Lichtblockade-Messverfahren arbeitenden Partikelsensor für strömende flüssige oder gasförmige Medien in einer möglichst kostengünstig ausgestaltbaren kompakt-miniaturisierten Bauform zu schaffen.

Die Erfindung löst diese Aufgabe mit den im Patentanspruch 1 angegebenen Merkmalen. Vorteilhafte Weiterbildungen sind Gegenstand der Unteransprüche.

Der erfindungsgemäße Partikelsensor zeichnet sich dadurch aus, dass ein Gehäusekörper mit zwei sich gegenüberliegenden Seitenflächen mit jeweils einer sich in ihn hinein erstreckend ausgebildeten Anordnungsausnehmung für eine miniaturisierte Lichtquelle bzw. einen miniaturisierten Lichtdetektor vorgesehen ist, dass diese beiden Anordnungsausnehmungen durch eine im Inneren des Gehäusekörpers zwischen ihnen vorgesehene membranähnlich dünne, zu der von der Lichtquelle definierten optischen Achse senkrecht ausgerichtete Lochblende voneinander getrennt sind, welche als Engpassausgestaltung eine lochförmige Engpassöffnung mit geringer, vom jeweiligen Sensor-Einsatzzweck abhängiger Größe ausgerichtet zu der optischen Achse aufweist, dass sich die in der Anordnungsausnehmung angeordnete Lichtquelle mit zumindest einem Teilbereich ihrer Stirnseite und des an dieser vorgesehenen Lichtaustrittsfensters in einem zumindest an die Größe der Engpassöffnung angepassten, die Ausbildung eines spaltartig-schmalen Mediumstrom-Zuführzwischenraums bewirkenden Abstand von der Vorderseite der Lochblende befindet, dass sich der in der Anordnungsausnehmung angeordnete Lichtdetektor mit zumindest einem Teilbereich seiner Stirnseite und des an dieser vorgesehenen Lichteintrittsfensters in einem zumindest an die Größe der Engpassöffnung angepassten, die Ausbildung eines spaltartig-schmalen Mediumstrom-Abführzwischenraums bewirkenden Abstand von der Rückseite der Lochblende befindet. Vorzugsweise weist der Medien-Strömungsweg zumindest jeweils einen kanalartig ausgebildeten Abschnitt zur Verbindung sowohl des Medienstrom-Zuführanschlusses mit dem Zuführ-Zwischenraum als auch des Abführ-Zwischenraumes mit dem Medienstrom-Abführanschlussauf.

Die Erfindung basiert auf der Idee, den auf Partikel zu untersuchenden Mediumstrom nicht mehr in einem, zusätzlich zum Sensorgehäuse, separaten Detektorengehäuse durch die von der Seite beleuchtete Engpassausgestaltung einer gläsernen Messzelle, sondern rechtwinklig durch eine nur noch lochförmige Engpassöffnung in einer membranähnlich, d. h. extrem dünnen Art Lochblende zu leiten. Dabei ist vorgesehen, dass ebenso auch die von der Lichtquelle definierte optische Achse durch die Engpassöffnung verläuft und folglich auch der von der Lichtquelle ausgesendete Lichtstrahl. Er soll die grundsätzlich sehr kleine Querschnittsfläche der Engassöffnung und damit ebenso auch die des sie passierenden Mediumstroms vollständig beleuchten, da es für die Partikeldetektion nur auf das durch diese Querschnittsflächen hindurchgehende Licht ankommt.

Da die Größe der grundsätzlich sehr kleinen Engpassöffnung vorrangig an das bestimmungsgemäß mit einem Partikelsensor zu prüfenden Partikelträgermedium und dessen Eigenschaften angepasst wird und sich danach jeweils auch der Abstand der Lichtquelle von der Lochblende richtet, kann der Abstrahl- bzw. Divergenzwinkel der Lichtquelle, vorrangig eine Laserdiode, zwischen z. B. 5° und 20°, ggf. auch bis zu 40° betragen. Dabei ist zu beachten, dass bei größer werdendem Winkel die Partikelgrößenauflösung schlechter wird.

Ideal wäre ein Licht-Abstrahlwinkel von 0°, was aber bei divergenten Lichtstrahlen, wie z. B. Laserstrahlen, nur durch eine kostenverursachende Kollimation erreicht werden könnte.

Bei einem derart parallelgerichteten Lichtstrahl würde ein sich z. B. im Mediumstrom in der Nähe des Lichtaustrittsfensters einer Laserdiode befindender, von dort zur Engpassöffnung hin mitgeführter Partikel nicht zu einem Messfehler führen. Bei einem divergenten Lichtstrahl wird dagegen der Messfehler umso größer, je näher er sich vor dem Lichtaustrittsfenster der Lichtquelle befindet, da sich dabei seine Lichtabschattungswirkung verstärkt. Ein solcher Messfehler könnte aber elektronisch kompensiert werden.

Werden aber gewisse Abstriche bei der Partikelgrößenauflösung durch Verwendung von einen divergierenden Lichtstrahl aussendenden Lichtquellen, wie z. B. Laserdioden, akzeptiert, dann können sie mit ihrer ein planes Lichtaustrittsfenster aufweisenden Stirnseite auf der einen und mit den ein planes Lichteintrittsfenster an der Stirnseite aufweisenden Lichtdetektoren auf der anderen Seite der Lochblende die Begrenzung für eine kostengünstige Messzelle bilden. Die bisher übliche gläserne Messzelle wird dadurch überflüssig.

Durch diese erfindungsgemäße Konfiguration eines Partikelsensors mit einer sehr dünnen Art Lochblende mit einer sehr kleinen lochförmigen Engpassöffnung und einem entsprechend spaltartig-schmalen Mediumstrom-Zuführ- und Abführ-Zwischenraum können sowohl flüssige als auch gasförmige Medien auf in ihnen enthaltene Verunreinigungs-Partikel kontrolliert werden. Denn dieser Partikelsensor kann auf einfache Weise an die spezifischen Eigenschaften der flüssigen und gasförmigen Partikelträgermedien bzw. die erwartete maximale Größenordnung der darin erwarteten Partikel angepasst werden. Denn hierzu sind fertigungstechnisch nur einfache Bohr- und z. B. Fräsarbeiten erforderlich, die heute keinen besonderen Aufwand mehr darstellen. Dabei gilt: Möglichst kleine Engpassöffnungsgröße und möglichst schmale, sowohl vom zu prüfenden Medium zu durchströmende als auch vom Lichtstrahl zu durchquerende Zwischenräume, um auch bei hoher Partikelkonzentration Koinzidenzfehler möglichst auszuschließen. Es muss hierbei jedoch auch z. B. die Viskosität des jeweiligen Partikelträgermediums berücksichtigt werden.

Kann der Abstand zwischen Lichtquelle und Lochblende klein sein, dann sind, wie schon keine gläserne Messzelle, bei Verwendung von z. B. Laserdioden mit den bereits erwähnten Lichtabstrahlwinkeln auch kein Kollimator und folglich keine zusätzliche Sammellinsen- bzw. Beleuchtungsoptik mehr erforderlich. Es können somit einerseits die Kosten für diese drei Bauteile sowie für ihren Montageaufwand gespart werden, andererseits kann dadurch auch die Größe des Sensorgehäuses entsprechend verringert und sogar ebenfalls miniaturisiert werden.

Da die erfindungsgemäß - mediumabhängig - mögliche sehr kleine Größe der Engpassöffnung der Lochblende bei entsprechend kleinem Divergenzwinkel zu einer Lichtkegel-Begrenzung und damit zu einer sehr homogenen Beleuchtung der dementsprechend geringen Querschnittsfläche des Mediumstroms führt, wird in Verbindung mit der aufgrund des kurzen Abstandes von der Lichtquelle hohen Lichtstärke im Lichtkegel eine hohe Qualität bei der Erfassung der Partikelgröße und der Partikelanzahl erreicht. Es können daher auch Medien mit hohen Partikelkonzentrationen sehr zuverlässig auf Partikel bis zu einer, z. B. einer vorausgehenden Filtrierung entsprechenden, maximal zu erwartenden Größenordnung kontrolliert werden.

Durch die erfindungsgemäß vorgesehene, je nach Partikelträgermedium ggf. extrem kleine Engpassöffnung in einer membranähnlich, d. h. extrem dünnwandigen Lochblende, mit einer Dicke von z. B. nur 0,1 mm, die somit selbst eigentlich keine räumliche Tiefe mehr hat, besteht unmittelbar beim Durchgang des Mediumstroms durch die Engpassöffnungsebene bzw. Lochblende nahezu keine Gefahr mehr von Koinzidenzfehlern. Diese ist stattdessen in den Zwischenräumen zwischen Lichtquelle und Lochblende bzw. Lochblende und Lichtdetektor gegeben, also im der lichten Weite der Engpassöffnung entsprechenden Zwischenraum-Bereich vor und nach der Lochblende, weshalb durch möglichst geringe Abstände zwischen diesen Teilen die dadurch ausgebildeten Zwischenräume ein möglichst geringes Volumen aufweisen sollen.

Außerdem wird so, in Verbindung mit der Beleuchtung der jeweils sehr kleinen bis extrem kleinen Engpassöffnungs-Fläche mit einem homogenen Lichtstrahl, sichergestellt, dass gleich große Partikel, unabhängig davon, an welcher Stelle sie die Engpassöffnungsebene passieren, die gleiche Lichtmenge abschatten, was sich ebenfalls vorteilhaft auf die Zuverlässigkeit der Partikelgrößenermittlung auswirkt. Zudem bewirkt eine derart dünne Lochblende auch eine Mediumstrom-Durchgangsregelung, da der Durchfluss durch eine sehr dünne Lochblende konstant ist.

Auch könnte die Anordnung von transparenten Körpern im Lichtstrahlbereich, z. B. aus Glas oder Kunststoff, die Fließeigenschaften des jeweiligen Mediums im Strahlbereich verbessern helfen.

Denkbar wäre es auch, allerdings unter Inkaufnahme zusätzlicher Kosten, zur Wirksamkeit eines zur Partikeldetektion verwendeten divergenten Lichtstrahls, auf der Innenseite des stirnseitigen Lichtaustrittsfensters seiner Lichtquelle einen Kollimator anzuordnen, um nicht die plane Fenster-Außenfläche im Hinblick auf die erfindungsgemäß angestrebte volumensparende spaltartig-schmale Ausbildung des Medienstrom-Zuführzwischenraums zwischen Lichtquellen-Stirnseite und Lochblende durch eine entsprechende Linsenoptik auf seiner Außenseite aufgeben zu müssen.

Durch die erfindungsgemäß im Inneren des Gehäusekörpers erreichten räumlichen Gegebenheiten können bei der Herstellung von dementsprechend ausgebildeten Durchström-Partikelsensoren Lichtquellen und Lichtdetektoren, vorzugsweise Laserlichtdioden und Fotodioden mit einem miniaturisierten zylindrischen Gehäuse mit einem Durchmesser und einer Bauhöhe in der Größenordnung von nur wenigen Millimetern, in handelsüblicher, d. h. kostengünstiger Standardqualität verwendet werden. Mit ihnen kann dann der Gehäusekörper selbst miniaturisiert werden, z. B. in einer kreiszylindrischen Ausgestaltung mit z. B. nur ca. 10 mm Länge und ca. 12 mm Durchmesser.

Die spaltartig schmalen Zwischenräume zwischen der Lichtquellen-Stirnseite mit dem planen Lichtaustrittsfenster und der Lochblende sowie der Lochblende und der Lichtdetektor-Stirnseite mit dem planen Lichteintrittsfenster weisen bereits ein entsprechend geringes Volumen auf, was sich auch günstig auf die Vorbereitung eines erfindungsgemäß ausgebildeten Partikelsensors für die nächste Partikeldetektion mit einem entsprechenden flüssigen oder gasförmigen Partikelträgermedium auswirkt. Denn ein geringeres Totvolumen erfordert weniger Spülaufwand für die jeweils notwendige Reinigung des Medienstrom-Durchleitungsweges durch den Gehäusekörper. Dieser Vorteil kann noch dadurch erhöht werden, dass im Verlauf des Medien-Strömungswegs durch den Gehäusekörper blind endende, d. h. nicht durchströmte, zu Rückstau führende Wegabschnitte verschlossen werden.

Es könnte auch das Licht der Lichtquelle, statt es von ihr aus der Nähe der Lochblende zu deren Engpassöffnung aussenden zu lassen, z. B. mittels eines Lichtwellenleiters von einem entfernten Lichtquellen-Standort an diese Stelle im Gehäusekörper geleitet werden. Dementsprechend würde dann auf der Rückseite der Lochblende die durch Partikel verursachte Lichtabschattung statt direkt an dieser Stelle durch einen Lichtdetektor zu erfassen, zunächst ebenfalls erst durch einen Lichtwellenleiter aufgenommen und zu einem räumlich davon entfernten Lichtdetektor geleitet werden. Dies könnte z. B. den Einsatz des erfindungsgemäßen Partikelsensors in explosionsgefährdeten Umgebungen vereinfachen, in denen sich dann die opto-elektronischen Bauteile, wie z. B. die Lichtquelle, der Lichtdetektor wie auch deren jeweilige Ansteuerelektronik, außerhalb einer derart kritischen Umgebung befinden.

Für ein Arbeiten direkt im Partikelträgermedium könnte es auch vorteilhaft sein, dass das Abdichten der Lichtwellenleiter einfacher als das Abdichten elektrischer Sensor-Anschlusskabel sein könnte.

Anhand von schematischen Zeichnungen wird nachfolgend ein bevorzugtes Ausführungsbeispiel der Erfindung beschrieben.

Es zeigen:
- Fig. 1: einen axialen Längsschnitt durch den beidseits um eine Platine erweiterten Gehäusekörper eines erfindungsgemäßen Partikelsensors in einer 5-fachen Vergrößerung und
- Fig. 2: etwas verkleinert den Gehäusekörper-Längsschnitt aus Fig. 1, versehen mit einem stilisiert dargestellten, Partikel enthaltenden Mediumstrom durch den Gehäusekörper und, rechts daneben, den durch einen Kreis gekennzeichneten mittigen Bereich des Gehäusekörpers in einer zusätzlichen Vergrößerung, die außerdem auch zusätzliche Ausgestaltungen für eine weitere Totraumverringerung zeigt.

Der in den beiden Figuren im Längsschnitt gezeigte miniaturisierte kreiszylindrische Gehäusekörper 1 der erfindungsgemäßen Partikelsensoren, die im Grunde genommen eine neue Gattung bilden, hat nur noch eine Länge von ca. 10 mm und nur noch einen Durchmesser von ca. 12 mm. Zum Einsatz in den Partikelträgermedien Wasser und Chemikalien besteht er vorzugsweise aus rostfreiem Stahl, in Öl z. B. aus Aluminium.

Zur gezeigten bündigen Anordnung einer handelsüblichen miniaturisierten Standard-Laserdiode 2, die einen Laserchip 3 und eine Monitordiode 4 enthält, als Sensor-Lichtquelle in der Lichtquellenseite 5 des Gehäusekörpers 1, ist ein entsprechend ihrer gestuften Gehäuseausgestaltung sich gestuft ins Innere des Gehäusekörpers 1 verengendes Sackloch 6 als Anordnungsausnehmung koaxial zur nicht dargestellten Längsachse des Gehäusekörpers 1 ausgebildet. Von der darin angeordneten, z. B. einklebten, Laserdiode 2 weist die plane Stirnseite 7 mit einem dementsprechend planen Lichtaustrittsfenster 8 ins Innere des Gehäusekörpers 1.

Die drei Anschlussdrähte 9 der Laserdiode 2 enden in einer hier vorzugsweise an den Durchmesser des zylindrischen Gehäusekörpers 1 angepasst, entsprechend kreisrunden Platine 10. Sie ist mit den - stilisiert dargestellten - Bauteilen 11 für die Ansteuerungselektronik der Laserdiode 2 bestückt, die mit einem nicht gezeigten Anschlusskabel mit dem Steuer- und Auswertegerät des jeweiligen Partikelzählsystems verbunden ist.

Zur Anordnung einer handelsüblichen miniaturisierten Fotodiode 12, die eine fotoempfindliche Fläche 13 enthält, als Sensor-Lichtdetektor in der Detektorseite 14 des Gehäusekörpers 1, ist ein zweites Sackloch 15 als Anordnungsausnehmung ebenfalls koaxial zur Längsachse des Gehäusekörpers 1 ausgebildet. Darin ist die Fotodiode 12 mit ins Innere des Gehäusekörpers 1 weisender, ebenfalls planer Stirnseite 16 mit einem dementsprechend planen Lichteintrittsfenster 17 mittels eines Halterings 18 aus Kunststoff zur elektrischen Isolation ihres metallenen Gehäuses gegenüber dem metallenen Gehäusekörper 1 im Sackloch 15 gehalten.

Auch ihre drei Anschlussdrähte 19 enden in einer hier ebenso vorzugsweise bündig mit dem Umfangsrand der Detektorseite 14 abschließend gezeigten kreisrunden Platine 20, die mit - auch stilisiert dargestellten - Bauteilen 11 für die Ansteuerungselektronik der Fotodiode 12 bestückt ist und auch mit einem nicht gezeigten Anschlusskabel mit dem Steuer- und Auswertegerät des jeweiligen Partikelzählsystems verbunden ist.

Beide Platinen 10, 20 können zudem z. B. durch jeweils eine in den Figuren nicht dargestellte, z. B. seitlich auf den Gehäusekörper 1 aufgeschobene Kappe aus Kunststoff zusätzlich gehalten und geschützt sein, aus denen die externen Anschlusskabel der Platinen herausgeführt sind.

Im Inneren des Gehäusekörpers 1 ist eine die beiden Sacklöcher 6, 15 begrenzende bzw. voneinander trennende kreisrunde, senkrecht zur Längsachse des Gehäusekörpers 1 verlaufende Art Lochblende 21, z. B. mittels einer einfach ausführbaren Fräs- und Bohrwerkzeug-Bearbeitung, ausgebildet. Sie ist membranähnlich extrem dünn und weist sozusagen nur eine "Papierblatt-Dicke" zwischen ca. 0,1 mm und max. ca. 0,2 mm auf. Für den von links nach rechts vorgesehenen Durchgang eines Partikel 22 enthaltenden Mediumstroms 23 ist sie, um Koinzidenzfehler möglichst zu vermeiden, mit einer lochförmig-kreisrunden Engpassöffnung 24 versehen mit dem im Hinblick auf das jeweils vorgesehene Partikelträgermedium oder die im Mediumstrom 23 erwarteten größtmöglichen Partikelgrößenordnung kleinstmöglichen Durchmesser. Ihre Positionierung ist so gewählt, dass sie von der von der Laserdiode 2 definierten optischen Achse durchquert wird, die hier mit der Längsachse des Gehäusekörpers 1 zusammenfällt.

Als Lochblende 21 kann auch eine im Gehäusekörper 1 angeordnete, z. B. eingeklebte Einlochscheibe vorgesehen sein.

Die Abstände zwischen der Stirnseite 7 mit dem Lichtaustrittsfenster 8 der Laserdiode 2 und der Vorderseite der Lochblende 21 sowie deren Rückseite und der Stirnseite 16 mit dem Lichteintrittsfenster 17 der Fotodiode 12 sollen sowohl einen nur spaltartig-schmalen, also möglichst geringvolumigen Zuführ-zwischenraum 25 als auch Abführzwischenraum 26 für den Mediumstrom 23 bewirken, da in beiden durch das sie entweder von der Laserdiode 2 zur Engpassöffnung 23 bzw. von dieser zur Fotodiode durchquerende Laserstrahl-Licht Koinzidenzfehler entstehen können.

Z. B. kann der vom Partikelträgermedium abhängige Durchmesser der üblicherweise kreisrunden Engpassöffnung 24 bei Wasser z. B. ca. 0,3 mm, bei Öl z. B. ca. 0,5 mm und bei Luft z. B. ca. 1 bis 2 mm und mehr betragen. Dementsprechend betragen dann die überwiegend daran anpassbaren Abstände von Laserdiode 2 und Lochblende 21, zur Ausbildung des Zuführzwischenraums 25, bzw. von Lochblende 21 und Fotodiode 12, zur Ausbildung des Abführzwischenraums 26, ebenso bei Wasser ca. 0,3 mm, bei Öl ca. 0,5 mm und bei Luft ca. 1 bis 2 mm und mehr.

Der Gehäusekörper 1 der überwiegend jeweils nur zur Prüfung der in einer bestimmten Mediumgattung enthaltenen Partikel 22 ausgelegten und dementsprechend einsetzbaren erfindungsgemäßen Partikelsensoren ist herstellungsmäßig auf einfache Weise daran anpassbar. Nämlich z. B. durch Bohren entsprechend kleiner Engpassöffnungen 24 sowie durch entsprechend tiefe Ausbildung der und/oder entsprechende Montage der Laserdiode 2 und der Fotodiode 12 in entsprechender Entfernung von der Lochblende 21 in ihren Sacklöchern 6 bzw. 15. Demgemäß müssen die Partikelsensoren für ihren jeweiligen Prüf- oder Kontrolleinsatz in der richtigen, z. B. mediumkonformen Auslegung ausgewählt werden.

Außen am Gehäusekörper 1, d. h. auf seiner Mantelfläche, sind ein Zuführ-Schlauchanschlussstutzen 27 und ein Abführ-Schlauchanschlussstutzen 28 für den jeweiligen Mediumstrom in annähernd einander gegenüberliegender, seitwärts voneinander versetzter Anordnung ausgebildet. Mit ihnen werden die jeweils auf Partikel 22 zu untersuchenden Medienströme 23 dem Gehäusekörper 1 mittels eines - entsprechend dünnen - Schlauches zugeführt und danach ebenso wieder aus dem Gehäusekörper 1 abgeführt. Von diesen beiden Stutzen 27, 28 führt jeweils rechtwinklig, also radial zur Längsachse des Gehäusekörpers 1, ein kurzer Stichkanal 29, 30 in dessen Inneres bis zur Wandung der beiden Sacklöcher 6, 15, wo er jeweils durch eine zum jeweils größeren Teil vom Gehäuse der Laserdiode 2 bzw. der Fotodiode 12 verdeckte Öffnung in den schmalen hohlzylindrischen Medienstrom-Zuführ- bzw. Abführzwischenraum 24, 26 einmündet. Somit wird der den Gehäusekörper 1 durchströmende Mediumstrom 23 zweimal um jeweils 90° umgelenkt, was vorteilhaft für die kompakte Ausgestaltung des Gehäusekörpers 1 genutzt werden kann.

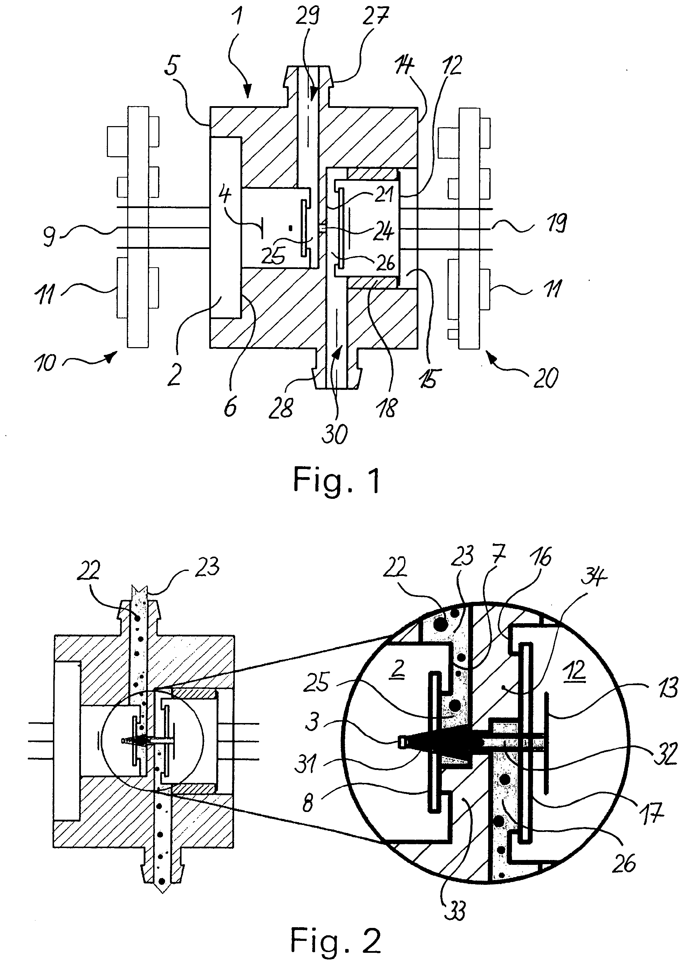

Auch trägt dazu bei, dass die beiden Stichkanäle 29, 30 nur durch die Breite der Lochblende 2, d. h., wie im Längsschnitt in Fig. 1 gezeigt, nur entsprechend äußerst geringfügig voneinander beabstandet sind und somit ihre Mündungsöffnungen in die Sacklöcher 6, 15 von Laserdiode 2 und Fotodiode 12 an jeweils einer Öffnungsrandstelle an die Vorder- bzw. Rückseite der Lochblende 21 angrenzen. D. h., diese beiden Seiten der Lochblende 2 gehen an diesen beiden Stellen platzsparend und totraumvermeidend jeweils unterbrechungsfrei in die Innenwandung des jeweiligen Stichkanals 29, 30 über.

Statt der in den beiden Figuren gezeigten jeweils radialen, etwa annähernd einer Durchmesserlinie entsprechenden Verlaufsrichtung der beiden Stichkanäle 29, 30, könnten diese auch anders gerichtet zu dem Zuführ- bzw. Abführ-Zwischenraum 24, 26 verlaufend ausgebildet sein und z. B. einen Winkel von z. B. nur 90° bilden.

Wie insbesondere in der Vergrößerung der Fig. 2 veranschaulicht, sendet der Laserchip 3 der Laserdiode 2 einen Laser-Lichtstrahl 31 durch deren planes Lichtaustrittsfenster 8 aus. Er trifft, je nach vorgesehenem Partikelträgermedium, nach der ggf. kurzen Entfernung von z. B. nur ca. 0,3 mm bis ca. 2 mm als geringfügig divergierter Lichtkegel auf die Lochblende 21 auf, deren Engpassöffnung 24 er folglich überdeckend beleuchtet. Allerdings dürfte das Ausmaß der Divergenz des in der Vergrößerung in Fig. 2 zur Veranschaulichung gezeigten Lichtkegels übertrieben sein.

In Abhängigkeit vom Abstrahlwinkels des Laserstrahls 31 vom Laserchip 3 nimmt zumeist nur ein relativ kleiner Teil, d. h. ein äußerer Kranz des erzeugten Lichtkegels, nicht an deren Beleuchtung teil. Eine Beleuchtungs-Optimierung könnte ggf. durch Anpassung der Querschnittsform der Engpassöffnung an die des keulenförmig divergierenden Laserstrahls 31 erfolgen.

Durch die membranartig extrem dünne Lochblende 21 von z. B. nur ca. 0,1 mm Dicke ist der Laserstrahl 31 im Durchgangsbereich durch die Engpassöffnung 24 annähernd konstant homogen. Die Größe eines, wie in Fig. 2 gezeigt, im Mediumstrom 23 die Engpassöffnung 24 passierenden Partikels 22 wird von der Fotodiode 12 durch Messen der von ihm durch Lichtabschattung 32 des Laserstrahls 31 im Vergleich zur Lichtmenge bei partikelfreier Engpassöffnung bewirkten Lichtmengendifferenz und deren Umsetzen in ein entsprechendes Spannungssignals für die anschließende Partikelzähl-Auswertung erfasst.

Idealerweise erfolgt die Partikelgrößenmessung genau in der Ebene der Engpassöffnung 23 bzw. der Lochblende 21, d. h. im Zentrum des Lichtkegels.

Für eine weitere Verringerung der in den nicht über ihre gesamte Erstreckung durchströmten Zwischenräumen sich ausbildenden Toträume im Gehäusekörper 1, in denen sich sonst insbesondere z. B. Feststoffkörper-Partikel 22 aus flüssigen und gasförmigen Medienströmen bis hin zur Sensor-Verstopfung ablagern könnten, können, wie in der Ausschnitts-Vergrößerung in Fig. 2 gezeigt, sowohl von dem einen schmalen, scheibenartig kreiszylindrischen Hohlraum bildenden Zuführ-Zwischenraum 25 unterhalb der Engpassöffnung 24 wie auch von dem überwiegend einen ebensolchen Hohlraum bildenden Abführ-Zwischenraum 26 zumindest ein segmentförmiger Abschnitt oberhalb der Engpassöffnung 24 verschlossen sein. Und zwar jeweils durch eine an die in diesem Bereich vom Gehäuse der Laserdiode 2 und dem Lichtaustrittsfenster 8 bzw. dem Gehäuse der Fotodiode 12 und dem Lichteintrittsfenster 17 vorgegebenen Kontur bündig daran anschließend ausgebildete Materialverdickungen 33, 34 der Lochblende 21.

Die das Segment des Abführ-Zwischenraums 25 verschließende Materialverdickung 33 könnte auch noch den davon betroffenen Randabschnitt des Gehäuses der Fotodiode 12 bis hin zum Haltering 18 umgreifend ausgebildet sein, um auch diesen Hohlraum zu verschließen.

Die in der Vergrößerung in Fig. 2 gezeigten Materialverdickungen 33, 34 können, statt nur segmentartig ausgebildet zu sein, auch jeweils als eine rotationssymmetrische 3-dimensionale Materialverdickung mit kreisringförmiger Grundfläche mit der Engpassöffnung 24 im Zentrum ausgebildet sein. Der dadurch dann jeweils auf beiden Seiten der Lochblende 21 entstehende zentrische napfförmige Hohlraum könnte durch jeweils eine stirnseitige Nut in der Stirnseite der beiden Materialverdickungen 33, 34 mit dem Zuführ-Stichkanal 29 bzw. dem Abführ-Stichkanal 30 in Verbindung stehen.

Die so zusätzlich verkleinerten Toträume verringerten nochmals den Spülaufwand für einen Partikelsensor bei seiner Vorbereitung für die nächste Partikel-Kontrollprüfung.

Aufgrund des auch, wie in den beiden Figuren gezeigt, im Vergleich zum eingangs zitierten Stand der Technik nahezu miniaturisiert ausführbaren Gehäusekörpers 1 eines erfindungsgemäßen Partikelsensors, kann dieser z. B. auch unmittelbar in einer ein auf Partikel zu untersuchenden Mediumstrom weiterleitenden Leitung eingesetzt werden, also ohne z. B. einen Teilstrom des Mediums daraus abzweigen zu müssen.

Mit der erfindungsgemäßen neuen Partikelsensor-Gattung mit neuartig kompakt-miniaturisiert ausgebildeten Gehäusekörper 1 können somit ganz neue Einsatzbereiche für die Partikelzählung erschlossen werden.

### Bezugszeichenliste

- 1: Gehäusekörper
- 2: Lichtquelle, Laserdiode
- 3: Laserchip
- 4: Monitordiode
- 5: Seitenfläche, Lichtquellenseite von 1
- 6: Anordnungsausnehmung, gestuftes Sackloch für 2
- 7: Stirnseite von 2
- 8: Lichtaustrittsfenster von 2
- 9: Anschlussdrähte von 2
- 10: Platine von 2
- 11: Bauteile von 10 und 20
- 12: Lichtdetektor, Fotodiode
- 13: fotoempfindliche Fläche von 12
- 14: Seitenfläche, Detektorseite von 1
- 15: Anordnungsausnehmung, Sackloch für 12
- 16: Stirnseite von 12
- 17: Lichteintrittsfenster von 12
- 18: Haltering
- 19: Anschlussdrähte von 12
- 20: Platine von 12
- 21: Lochblende
- 22: Partikel
- 23: Mediumstrom
- 24: Engpassöffnung
- 25: Zuführ-Zwischenraum
- 26: Abführ-Zwischenraum
- 27: Zuführ-Anschluss, Zuführ-Schlauchanschlussstutzen
- 28: Abführ-Anschluss, Abführ-Schlauchanschlussstutzen
- 29: kanalartiger Abschnitt, Zuführ-Stichkanal
- 30: kanalartiger Abschnitt, Abführ-Stichkanal
- 31: Lichtstrahl, Laserstrahl
- 32: Lichtabschattung
- 33: Materialverdickung
- 34: Materialverdickung

## Patentansprüche

1. Partikelsensor für strömende flüssige oder gasförmige Medien, wobei der Partikelsensor nach dem Lichtabschattungs-Messverfahren arbeitet, mit
- einem Mediumströmungsweg, der einen Zuführ- anschluss (27) für den Mediumstrom (23), eine Engpassausgestaltung (23) für die Partikeldetektion und einen Abführanschluss (28) für den Mediumstrom aufweist,
- einer miniaturisierten Lichtquelle (2) mit einer Stirnseite (7) mit einem Lichtaustrittsfenster (8) zur Aussendung eines zur Beleuchtung der Engpassausgestaltung (23) bestimmten Lichtstrahls (31) und
einem miniaturisierten Lichtdetektor (12) mit einer Stirnseite (16) mit einem Lichteintrittsfenster (17) zur Aufnahme des durch die Engpassausgestaltung (23) hindurchgegangene Lichtstrahl-Lichts,
**dadurch gekennzeichnet,**
**dass** ein Gehäusekörper (1) mit zwei sich gegenüberliegenden Seitenflächen (5, 14) mit jeweils einer sich in ihn hinein erstreckenden Anordnungsausnehmung (6, 15) für die Lichtquelle (2) bzw. den Lichtdetedktor (12) vorgesehen ist,
- **dass** diese beiden Anordnungsausnehmungen (6, 15) durch eine im Inneren des Gehäusekörpers (1) zwischen ihnen vorgesehene membranähnliche, zu der von der Lichtquelle (2) definierten optischen Achse senkrecht ausgerichtete Lochblende (21) voneinander getrennt sind, welche als Engpassausgestaltung (24) eine lochförmige Engpassöffnung mit geringer Größe ausgerichtet zu der optischen Achse aufweist,
- **dass** sich die in der Anordnungsausnehmung (6) angeordnete Lichtquelle (2) mit zumindest einem Teilbereich ihrer Stirnseite (7) und des an dieser vorgesehenen Lichtaustrittsfensters (8) in einem zumindest an die Größe der Engpassöffnung (24) angepassten, die Ausbildung eines spaltartig-schmalen Zuführzwischenraums (25) für den Medienstrom (23) bewirkenden Abstand von der Vorderseite der Lochblende (21) befindet,
- **dass** sich der in der Anordnungsausnehmung (15) **angeordnete Lichtdetektor** (12) mit zumindest einem Teilbereich seiner Stirnseite (16) und des an dieser vorgesehenen Lichteintrittsfensters (17) in einem zumindest an die Größe der Engpassöffnung (24) angepassten, die Ausbildung eines spaltartig-schmalen Abführ-Zwischenraums (26) für den Medienstrom (23) bewirkenden Abstand von der Rückseite der Lochblende (21) befindet und dass die Größe eines im Mediumstrom (23) die Engpassöffnung (24) passierenden Partikels (22) vom Lichtdetektor (12) durch Lichtabschattung des Lichtstrahl-Lichts der Lichtquelle (2) bestimmt wird.

2. Partikelsensor nach Anspruch 1, **dadurch gekennzeichnet, dass** der Gehäusekörper (1) als ein miniaturisierter kreiszylindrischer Körper ausgebildet ist.

3. Partikelsensor nach Anspruch 2, **dadurch gekennzeichnet, dass** der Medien-Strömungsweg zumindest jeweils einen kanalartig ausgebildeten Abschnitt (29,30) zur Verbindung sowohl des Zuführanschlusses (27) für den Mediumstrom (23) mit dem Zuführ-Zwischenraum (24) als auch des Abführ-Zwischenraumes (26) mit dem Abführanschluss für den Medienstrom aufweist und dass es sich bei den beiden Abschnitten (29, 30) um zwei radial zur Längsachse des Gehäusekörpers (1) von dessen Außenwandung in dessen Inneres verlaufende, jeweils durch eine Öffnung in der Wandung der Anordnungsausnehmung (6 bzw.15) der Lichtquelle (2) bzw. des Lichtdetektors (12) in diese einmündende Stichkanäle handelt.

4. Partikelsensor nach Anspruch 3, **dadurch gekennzeichnet, dass** die einander benachbarten Wandungsränder der beiden Stichkanäle (29, 30) lediglich um die Breite der Lochblende (21) voneinander beabstandet sind, so dass deren Mündungsöffnungen mit jeweils einer Randstelle an die Vorderseite bzw. Rückseite der Lochblende (20) angrenzen.

5. Partikelsensor nach einem der vorhergehenden Ansprüche, **dadurch gekennzeichnet, dass** als Lichtquelle (2) eine handelsübliche miniaturisierte Standard-Laserdiode mit einem zumindest auf ihrer Außenseite plan ausgebildeten Lichtaustrittsfenster (8) an ihrer planen Stirnseite (7) vorgesehen ist.

6. Partikelsensor nach Anspruch 5, **dadurch gekennzeichnet, dass** die Ansteuerelektronik für die Laserdiode (2) auf einer an der Lichtquellenseite (5) des Gehäusekörpers (1) vorgesehenen, durch eine sie umschließende Schutzvorrichtung geschützte Platine (10) angeordnet ist.

7. Partikelsensor nach einem der vorhergehenden Ansprüche, **dadurch gekennzeichnet, dass** als Lichtdetektor (12) eine handelsübliche miniaturisierte Standard-Fotodiode mit einem plan ausgebildeten Lichteintrittsfenster (17) an ihrer planen Stirnseite (16) vorgesehen ist.

8. Partikelsensor nach Anspruch 7, **dadurch gekennzeichnet, dass** die Ansteuerelektronik für die Fotodiode (12) auf einer an der Detektorseite (14) ·des Gehäusekörpers (1) vorgesehenen, durch eine sie umschließende Schutzvorrichtung geschützte Platine (20) angeordnet ist.

9. Partikelsensor nach einem der vorhergehenden Ansprüche 5 bis 8, **dadurch gekennzeichnet, dass** auf der Innenseite des planen Lichtaustrittsfensters (8) der Laserdiode (2) ein Kollimator vorgesehen ist.

10. Partikelsensor nach einem der vorhergehenden Ansprüche 7 bis 9, **dadurch gekennzeichnet, dass** der ab einer geringen Entfernung von der Engpassöffnung (23) bis zu dem dem Abführanschluss (28) gegenüberliegenden Randbereich der Anordnungsausnehmung (15) der Fotodiode (12) einen segmentförmigen Totraum zwischen der Rückseite der Lochblende (21) und der Stirnseite (16) mit dem Lichteintrittsfenster (17) der Fotodiode (12) bildende Abschnitt des hohlzylindrischen Abführ-Zwischenraum (26) durch eine ebenfalls an die in diesem Bereich zumindest vorn Gehäuse der Fotodiode (12) und ihrem Lichteintrittsfenster (17) bestimmte Kontur bündig anschließend ausgebildete Materialverdickung (34) verschlossen ist.

11. Partikelsensor nach Anspruch 10, **dadurch gekennzeichnet, dass** sich die segmentförmige Materialverdickung (34) bis zu dem die Fotodiode (12) haltenden Haltering (18) erstreckt.

12. Partikelsensor nach Anspruch 5, **dadurch gekennzeichnet, dass** anstelle einer Laserdiode (2) eine Leuchtdiode (LED) vorgesehen ist.

13. Partikelsensor nach einem der Ansprüche 1 bis 4, **dadurch gekennzeichnet, dass** an Stelle von Lichtquelle (2) und Lichtdetektor (12) jeweils ein in deren Anordnungsausnehmungen (6, 15) endender Lichtwellenleiter vorgesehen ist.

## Claims

1. Particle sensor for flowing liquid or gaseous media, said particle sensor functioning according to the light obscuration measuring method, with
- a medium flow path which includes a feed connection (27) for the medium flow (23), a narrow passage configuration (23) for particle detection and a discharge connection (28) for the medium flow,
- a miniaturised light source (2) with an end face (7) containing a light emission window (8) for transmission of a light beam (31) intended for illumination of the narrow passage configuration (23) and a miniaturised light detector (12) with an end face (16) containing a light entry window (17) for reception of the light from the light beam which has passed through the narrow passage configuration (23),
**characterised in that**
a housing body (1) is provided with two opposite side surfaces (5, 14), each with a mounting recess (6, 15) for the light source (2) or the light detector (12) extending into said surface,
- that these two mounting recesses (6, 15) are separated from one another by a diaphragm-like aperture diaphragm (21), provided between them in the interior of the housing body (1), which is oriented perpendicular to the optical axis defined by the light source (2) and which contains as a narrow passage configuration (24) a hole-formed pinhole aperture of small size oriented in line with the optical axis,
- that the light source (2) arranged in the mounting recess (6) is, with at least a partial region of its end face (7) and of the light emission window (8) provided thereon, located at a distance from the front side of the aperture diaphragm (21) at least adapted to the size of the pinhole aperture (24), leading to the formation of a narrow, slot-like feed gap (25) for the medium flow (23),
- that the light detector (12) arranged in the mounting recess (15) is, with at least a partial region of its end face (16) and of the light entry window (17) provided thereon, located at a distance from the rear side of the aperture diaphragm (21) at least adapted to the size of the pinhole aperture (24), leading to the formation of a narrow, slot-like discharge gap (26) for the medium flow (23) and that the size of a particle (22) in the medium flow (23) passing through the pinhole aperture (24) is determined by the light detector (12) through light obscuration of the light in the light beam emitted by the light source (2).

2. Particle sensor according to claim 1, **characterised in that** the housing body (1) is designed as a miniaturised circular cylindrical body.

3. Particle sensor according to claim 2, **characterised in that** the medium flow path includes in each case at least one channel-like section (29, 30) for connecting both the feed connection (27) for the medium flow (23) with the feed gap (24) and for connecting the discharge gap (26) with the discharge connection for the medium flow, and that the two sections (29, 30) are two branch channels running radially to the longitudinal axis of the housing body (1) from its outer wall into its interior, in each case through an opening in the wall of the mounting recess (6 or 15) of the light source (2) or of the light detector (12) and opening into said recesses.

4. Particle sensor according to claim 3, **characterised in that** the adjacent wall edges of the two branch channels (29, 30) are only spaced apart by the width of the aperture diaphragm (21), so that a point on the periphery of their respective mouth openings adjoins the front side or rear side of the aperture diaphragm (20).

5. Particle sensor according to one of the preceding claims, **characterised in that** a commercially available miniaturised standard laser diode with a light emission window (8) of planar design, at least on its outer side, is provided on its planar end face (7) as a light source (2).

6. Particle sensor according to claim 5, **characterised in that** the control electronics for the laser diode (2) are arranged on a circuit board (10) provided on the light source side (5) of the housing body (1) which is protected by a protective device surrounding it.

7. Particle sensor according to one of the preceding claims, **characterised in that** a commercially available miniaturised standard photo diode with a light entry window (17) of planar design is provided on its planar end face (16) as a light detector (12).

8. Particle sensor according to claim 7, **characterised in that** the control electronics for the photodiode (12) are arranged on a circuit board (20) provided on the detector side (14) of the housing body (1) which is protected by a protective device surrounding it.

9. Particle sensor according to one of the preceding claims 5 to 8, **characterised in that** a collimator is provided on the inner side of the planar light emission window (8) of the laser diode (2).

10. Particle sensor according to one of the preceding claims 7 to 9, **characterised in that** the section of the hollow cylindrical discharge gap (26) extending from a short distance from the pinhole aperture (23) up to the edge region of the mounting recess (15) of the photodiode (12) opposite the discharge connection (28) forming a segment-formed dead space between the rear side of the aperture diaphragm (21) and the end face (16) containing the light entry window (17) of the photodiode (12) is sealed by a material thickening (34) also formed so as to align flush with the contour determined in this region at least by the housing of the photodiode (12) and its light entry window (17).

11. Particle sensor according to claim 10, **characterised in that** the segment-formed material thickening (34) extends up to the retaining ring (18) holding the photodiode (12).

12. Particle sensor according to claim 5, **characterised in that** a light-emitting diode (LED) is provided instead of a laser diode (2).

13. Particle sensor according to one of the claims 1 to 4, **characterised in that**, instead of the light source (2) and light detector (12), a fibre optic cable ending in the respective mounting recesses (6, 15) is in each case provided.

## Revendications

1. Capteur de particules pour des milieux liquides ou gazeux en écoulement, dans lequel le capteur de particules travaille selon le procédé de mesure par masquage de lumière, comprenant
- un trajet d'écoulement de milieu qui présente un raccord d'amenée (27) pour le courant de milieu (23), une configuration d'étranglement (23) pour la détection de particules et un raccord d'évacuation (28) pour le courant de milieu,
- une source lumineuse (2) miniaturisée ayant une face frontale (7) présentant une fenêtre de sortie de lumière (8) pour émettre un faisceau lumineux destiné à éclairer ladite configuration d'étranglement (23), et un détecteur de lumière (12) miniaturisé ayant une face frontale (16) présentant une fenêtre d'entrée de lumière (17) destinée à recevoir la lumière de faisceau lumineux ayant traversé ladite configuration d'étranglement (23),
**caractérisé par le fait**
- **qu'**un corps de boîtier (1) ayant deux surfaces latérales (5, 14) opposées présentant chacune un évidement de disposition (6, 15) pour la source lumineuse (2) ou bien le détecteur de lumière (12), qui s'étend dans celui-ci, est prévu,
- **que** ces deux évidements de disposition (6, 15) sont séparés l'un de l'autre par un obturateur à trou (21) ressemblant à une membrane qui est prévu entre eux à l'intérieur du corps de boîtier (1) et est orienté perpendiculairement à l'axe optique défini par la source lumineuse (2) et qui présente, en tant que configuration d'étranglement (24), une ouverture d'étranglement de petite taille en forme de trou, orientée vers l'axe optique,
- **que** la source lumineuse (2) disposée dans ledit évidement de disposition (6) est située, avec au moins une zone partielle de sa face frontale (7) et de la fenêtre de sortie de lumière (8) prévue sur celle-ci, à une distance de la face avant de l'obturateur à trou (21), qui est adaptée au moins à la taille de l'ouverture d'étranglement (24) et provoque la réalisation d'un espace intermédiaire d'amenée (25) étroit de type fente pour le courant de milieu (23),
- **que** le détecteur de lumière (12) disposé dans ledit évidement de disposition (15) est situé, avec au moins une zone partielle de sa face frontale (16) et de la fenêtre d'entrée de lumière (17) prévue sur celle-ci, à une distance de la face arrière de l'obturateur à trou (21), qui est adaptée au moins à la taille de l'ouverture d'étranglement (24) et provoque la réalisation d'un espace intermédiaire d'évacuation (26) étroit de type fente pour le courant de milieu (23), et que la taille d'une particule (22) passant à travers l'ouverture d'étranglement (24) dans le courant de milieu (23) est déterminée par le détecteur de lumière (12) par masquage de lumière de la lumière de faisceau lumineux de la source lumineuse (2).

2. Capteur de particules selon la revendication 1, **caractérisé par le fait que** le corps de boîtier (1) est réalisé comme un corps cylindrique circulaire miniaturisé.

3. Capteur de particules selon la revendication 2, **caractérisé par le fait que** le trajet d'écoulement de milieux présente au moins respectivement une portion (29, 30) réalisée à la manière d'un canal qui est destinée à relier aussi bien le raccord d'amenée (27) pour le courant de milieu (23) à l'espace intermédiaire d'amenée (24) que l'espace intermédiaire d'évacuation (26) au raccord d'évacuation pour le courant de milieu, et que, dans le cas des deux portions (29, 30), il s'agit de deux canaux de dérivation qui s'étendent radialement par rapport à l'axe longitudinal du corps de boîtier (1) depuis sa paroi extérieure dans l'intérieur de celui-ci et qui débouchent chacun dans l'évidement de disposition (6 ou bien 15) de la source lumineuse (2) ou bien du détecteur de lumière (12), à travers une ouverture réalisée dans la paroi de celui-ci.

4. Capteur de particules selon la revendication 3, **caractérisé par le fait que** les bords de paroi voisins les uns des autres des deux canaux de dérivation (29, 30) ne sont espacés les uns des autres que de la largeur de l'obturateur à trou (21) de sorte que leurs ouvertures de décharge sont contiguës, avec respectivement un point de bord, à la face avant ou bien à la face arrière de l'obturateur à trou (20).

5. Capteur de particules selon l'une quelconque des revendications précédentes, **caractérisé par le fait que**, en tant que source lumineuse (2), on prévoit une diode laser standard miniaturisée disponible dans le commerce qui a une fenêtre de sortie de lumière (8) sur sa face frontale plane (7), qui est réalisée de manière plane au moins sur sa face extérieure.

6. Capteur de particules selon la revendication 5, **caractérisé par le fait que** l'électronique de commande pour la diode laser (2) est disposée sur une carte (10) qui est prévue sur le côté source lumineuse (5) du corps de boîtier (1) et protégée par un dispositif protecteur qui l'enveloppe.

7. Capteur de particules selon l'une quelconque des revendications précédentes, **caractérisé par le fait que**, en tant que détecteur de lumière (12), on prévoit une photodiode standard miniaturisée disponible dans le commerce qui a une fenêtre d'entrée de lumière (17) sur sa face frontale plane (16), qui est réalisée de manière plane.

8. Capteur de particules selon la revendication 7, **caractérisé par le fait que** l'électronique de commande pour la photodiode (12) est disposée sur une carte (20) qui est prévue sur le côté détecteur (14) du corps de boîtier (1) et protégée par un dispositif protecteur qui l'enveloppe.

9. Capteur de particules selon l'une quelconque des revendications précédentes 5 à 8, **caractérisé par le fait qu'**un collimateur est prévu sur la face intérieure de la fenêtre plane de sortie de lumière (8) de la diode laser (2).

10. Capteur de particules selon l'une quelconque des revendications précédentes 7 à 9, **caractérisé par le fait que** la portion de l'espace intermédiaire d'évacuation (26) cylindrique creux qui, à partir d'une faible distance de l'ouverture d'étranglement (23) jusqu'à la zone marginale opposée au raccord d'évacuation (28), de l'évidement de disposition (15) de la photodiode (12), forme un espace mort en forme de segment entre la face arrière de l'obturateur à trou (21) et la face frontale (16) avec la fenêtre d'entrée de lumière (17) de la photodiode (12), est fermée par une surépaisseur de matière (34) qui, elle aussi, est réalisée de manière à être contiguë à fleur au contour déterminé dans cette zone au moins par le boîtier de la photodiode (12) et sa fenêtre d'entrée de lumière (17).

11. Capteur de particules selon la revendication 10, **caractérisé par le fait que** ladite surépaisseur de matière (34) en forme de segment s'étend jusqu'à la bague de support (18) supportant la photodiode (12).

12. Capteur de particules selon la revendication 5, **caractérisé par le fait qu'**une diode électroluminescente (DEL) est prévue au lieu d'une diode laser (2).

13. Capteur de particules selon l'une quelconque des revendications 1 à 4, **caractérisé par le fait que**, au lieu de la source lumineuse (2) et du détecteur de lumière (12), respectivement un guide de lumière se terminant dans les évidements de disposition (6, 15) de ceux-ci est prévu.
